Europäisches Patentamt

**European Patent Office**

Office européen des brevets

(19)

(11) Publication number: **0 078 121**
A1

# (12) EUROPEAN PATENT APPLICATION

(21) Application number: **82305372.3**

(22) Date of filing: **08.10.82**

(51) Int. Cl.³: **A 23 F 5/18**
**A 23 F 5/26**

(30) Priority: **28.10.81 US 315831**

(43) Date of publication of application:
**04.05.83 Bulletin 83/18**

(84) Designated Contracting States:
**DE FR GB IT SE**

(71) Applicant: **GENERAL FOODS CORPORATION**
**250 North Street**
**White Plains, N.Y. 10625(US)**

(72) Inventor: **Turek, Evan Joel**
**11 London Drive**
**Jackson New Jersey 08527(US)**

(74) Representative: **Baillie, Iain Cameron et al,**
**c/o Ladas & Parry Isartorplatz 5**
**D-8000 München 2(DE)**

(54) **Process for producing high yield coffee extract with superior flavor.**

(57) A charge of freshly roasted coffee is atmospherically extracted which extract is retained for further processing. The remaining coffee grounds are then extracted under conditions sufficient to effect hydrolysis. The hydrolyzed coffee extract thereby obtained is contacted with an edible oil in order to remove off-flavor notes characteristic of said hydrolyzed coffee extract. The atmospheric coffee extract is combined with the improved hydrolyzed coffee extract to produce a high yield commercial coffee extract having excellent flavor.

EP 0 078 121 A1

Croydon Printing Company Ltd.

~~Case 2875~~

# DESCRIPTION
## PROCESS FOR PRODUCING HIGH YIELD COFFEE
## EXTRACT WITH SUPERIOR FLAVOR

### Technical Field

This invention relates to a process for producing a high yield commercial coffee extract having excellent flavor. More particularly, the invention involves removing the characteristic bitter, harsh and metallic flavors of hydrolyzed coffee extract by contact with an edible oil and combining said hydrolyzed coffee extract with a good flavored atmospherically extracted coffee extract.

### Background of the Invention

It has long been known that there are two extraction mechanisms involved in the commercial percolation of roasted coffee. The first mechanism is so-called atmospheric extraction wherein the water soluble constituents of roasted coffee are leached from the roasted coffee particle at a temperature usually less than 100°C and a pressure typically close to atmospheric. Though the flavor of such an atmospheric extract is equivalent to that obtained for a home brew of roasted and ground coffee, the yield of said extraction is only approximately 20% by weight of the original coffee charge.

The yield of coffee solids in commercial coffee percolation is increased to roughly 50% by weight of the original coffee charge through the second extraction mechanism, hydrolysis, which is the solubilization of otherwise insoluble starches and celluloses present in roasted coffee. Said hydrolyzed coffee solids are generated by operating the extraction process at temperatures and pressures sufficiently elevated to effect hydrolysis. A hydrolyzed coffee extract exhibits characteristic bitter, harsh and metallic flavors. The presence of hydrolyzed coffee solids then, introduces off flavor notes into the overall flavor of commercial coffee extract.

The art establishes methods for lessening the adverse impact of certain off-flavors introduced in soluble coffee extract production but such prior art does not focus on removing the undesirable flavors from hydrolyzed coffee solids. In U.S. Pat. No. 2,888,349 to Morrow et al., a three step extraction process is disclosed wherein the hydrolyzed coffee extract of the third step is added directly to the atmospheric extract of the first step. The atmospheric extract of the second step, containing certain undesirable flavor notes, is held separate and blended into the higher quality extract in small proportions. Though off-flavor notes are reduced by this process, said off flavor notes of the hydrolyzed coffee extract remain.

Similarly, U.S. Pat. No. 3,458,320 to Niven describes a two step extraction process wherein the atmospheric extraction step is to substantially equilibrium conditions whereby the atmospheric extract flavor is optimized. The subsequently obtained hydrolyzed coffee extract is added to said extract from the first step in whole or only in part should it be desired to reduce the off-flavors somewhat. Again, there is no treatment of the hydrolyzed coffee extract to reduce the off-flavor notes.

Prior art also teaches that caffeine may be removed from a caffeine-containing coffee extract by contact with an edible oil as disclosed in British Pat. Nos. 1,516,208 and 1,532,547. It is not a concern in the present invention that caffeine will be removed from the hydrolyzed coffee extract upon contact wth an edible oil because said hydrolysis extract does not contain any caffeine to begin with. This invention removes only undesirable off-flavor compounds from hydrolysis extract, a result not obvious from the fact that edible oil does remove caffeine from a similar extract which contains caffeine.

It is the principal object of this invention to provide a high yield commercial coffee extract having excellent flavor by removing the characteristic off-flavors of hydrolyzed coffee extract.

It is a further object of the invention to provide a process generally for improving the flavor of hydrolyzed coffee extract.

Disclosure of the Invention

A charge of freshly roasted coffee is atmospherically extracted whereby 20% by weight of the original coffee charge is extracted. The remaining coffee material is extracted under conditions sufficient to effect hydrolysis, namely a temperature of about 175°C under an elevated pressure. The resulting hydrolyzed coffee extract is contacted with an edible oil such as cottonseed oil. Said hydrolyzed coffee extract and said edible oil are separated. The atmospheric extract is combined with the improved hydrolyzed extract providing a high yield commercial coffee extract with an excellent flavor.

## Best Mode For Carrying Out The Invention

As hereinbefore noted, roasted coffee may be extracted in an atmospheric step and a hydrolysis step. The atmospheric step produces a coffee extract equivalent to that obtained in a home brew of roasted and ground coffee whereas an extract characteristically harsh, bitter and metallic tasting is obtained from the hydrolysis step. It has now been discovered that the off-flavors can be removed from the hydrolyzed coffee extract by contacting said extract with an edible oil.

The specific edible oil used is not particularly important. Said edible oil need only be immiscible with an aqueous coffee extract in order to be adequate. For instance, corn oil, soy bean oil, cottonseed oil or even deodorized coffee oil are all sufficient for carrying out the objects of the invention. It has been found that cottonseed oil is convenient since said oil is relatively inexpensive and widely available.

Contact of the hydrolyzed coffee extract and the edible oil may be made in any vessel or apparatus providing good liquid-liquid contact. For instance, said contact may be in batch, simply by agitating the ingredients in a tank. The perferred method of operation is in a continuous liquid-liquid column such as a reciprocating plate Karr column or a rotating disc column. Said columns are specifically designed to effect liquid-liquid contact of the sort required for the present invention.

When a liquid-liquid column is in fact used, it may be necessary to pass the exiting streams through a separating device in order to separate entrained emulsion. A solid bowl centrifuge or some variety of oil-water separation would be sufficient for present purposes. The separated liquids thereby obtained may be recycled back to the proper stream.

The contact of the hydrolyzed coffee extract with the edible oil may be carried out within a wide temperature range. Higher temperatures are generally preferred because the viscosity and density reductions of liquids at such temperatures facilitate said contact. The temperature can not be raised too high though without damaging the flavor of the hydrolyzed coffee extract. It has been found, however, that the objects of the invention are met if contact is between 21°C and 80°C.

The weight ratio of edible oil to the weight of the hydrolyzed coffee solids is significant because said ratio is intimately related to the processing costs. Operating costs rise considerably as the ratio increases. On the other hand, if said ratio is too small, the flavor of the hydrolyzed coffee extract will not be sufficiently improved to meet the objects of the invention. Toward that end, it has been found that said ratio should be at least 1 kg edible oil/.5 kg coffee solids. The preferred value is approximately 1 kg edible oil/.25 kg coffee solids.

Once the hydrolyzed coffee extract has been contacted with the edible oil, the characteristic harsh, bitter and metallic notes have been removed, leaving an extract characterized as thinner and slightly sour but lacking the off notes exhibited prior to contact. When the improved hydrolyzed extract is combined with an atmospheric extract, said hydrolyzed extract contributes essentially bland coffee solids whereas the atmospheric extract contributes the excellent flavor associated with such extract. The combination, therefore, provides a high yield commercial coffee extract having excellent flavor. Said high yield extract may be dried in any commonly accepted manner such as freeze drying, or spray drying, providing a soluble coffee powder having flavor superior to that of a conventionally produced product.

The process for improving the flavor of hydrolyzed coffee extract is not limited to hydrolyzed extract produced from the conventional water hydrolysis of roasted coffee. For instance, roasted coffee which has been both atmospherically and hydrolysis extracted is normally considered as spent grounds waste for commercial purposes. However, there is still coffee material present in said grounds which may be hydrolyzed by yet harsher conditions such as acid hydrolysis. The hydolyzed coffee extract obtained from such a process is perfectly suitable for elimination of the harsh, bitter and metallic flavor notes by contact with an edible oil. The improved hydrolyzed coffee extract can then be added to conventional coffee extract increasing the yield still further, representing a large economic benefit of the present invention.

The following examples demonstrate certain embodiments of the present invention.

Example 1

(a) A bed of freshly roasted and ground coffee was charged in a percolation column and atmospherically extracted at 93°C wherein 3.3 kg extract was produced for every 1 kg of coffee. The yield was approximately 12% by weight of the original coffee charge.

(b) The same coffee was then hydrolysis extracted at 177°C wherein 7.0 kg extract was produced for every 1 kg of coffee. The yield was approximately 26% by weight of the original coffee charge.

(c) A portion of the hydrolyzed coffee extract from (b) was freeze dried as a control.

(d) 750 ml of hydrolyzed coffee extract was contacted with 112.5 ml of cottonseed oil and agitated for 20 minutes at 52°C. The oil was then allowed to separate and was removed by pipet.

(e) An additional 75 ml of cottonseed oil was then used to contact the extract as described above and the oil layer again separated.

(f) The remaining hydrolyzed coffee extract was centrifuged to remove residual oil and subsequently freeze dried.

A panel of expert compared the reconstituted extracts as follows: Control: bitter, harsh, sour, heavy, metallic; Improved: thinner, slightly sour and lacking off notes of control.

Example 2

(a) A mixture of 20% by weight untreated hydrolyzed coffee extract from 1(b) and 80% by weight conventional commercial coffee extract was prepared.

(b) A mixture of 20% by weight improved hydrolyzed coffee extract from 1(f) and 80% by weight conventional commercial coffee extract was prepared.

(c) The mixtures made in (a) and (b) were diluted to the normal brew strength of 1.2% by weight soluble coffee solids.

A panel of expert tasters rated the extract of (a) as severely negative with respect to conventional commercial coffee extract. The same panel rated the extract of (b) as having no negatives with respect to conventional commercial coffee extract.

## CLAIMS

1.    A process for removing the off-flavor notes from a hydrolyzed coffee extract which comprises:

     (a)   contacting the hydrolyzed coffee extract with an edible oil;

     (b)   separating said hydrolyzed coffee extract and said edible oil subsequent to contact.

2.    The process of Claim 1 wherein the contact of the hydrolyzed coffee extract with the edible oil is carried out in a rotating disc column.

3.    The process of Claim 1 wherein the contact of the hydrolyzed coffee extract with the edible oil is carried out in a reciprocating plate Karr column.

4.    The process of Claim 1, 2 or 3 wherein the weight ratio of edible oil to the weight of hydrolyzed coffee solids is at least 1 kg edible oil/.5 kg hydrolyzed coffee solids.

5.    The process of Claim 4 wherein the contact of the hydrolyzed coffee extract with the edible oil is at a temperature of from 21°C to 80°C.

6.    The process of Claim 1 wherein the edible oil is cottonseed oil.

7.    A process for producing a high yield commercial coffee extract having excellent flavor which comprises:

     (a)   atmospherically extracting approximately 20% by weight of the original weight of a charge of freshly roasted coffee;

(b)   extracting the remaining coffee material from (a) under conditions which effect hydrolysis whereby an additional 5% by weight to 40% by weight of the original charge is extracted;

(c)   contacting the hydrolyzed coffee extract with an edible oil;

(d)   separating said hydrolyzed coffee extract and said edible oil;

(e)   combining the atmospheric extract from (a) with the improved hydrolyzed coffee extract from (d) wehreby a high yield commercial coffee extract having excellent flavor is produced.

8.   The process of Claim 1 which further comprises combining the improved hydrolyzed extract with conventional commercial coffee extract and drying the combination.

9.   A process for producing a superior soluble coffee product comprising freeze-drying the high yield commercial coffee extract of 7(e) of Claim 7.

10.   A process for producing a superior soluble coffee product comprising spray drying the high yield commercial coffee extract of 7(e) of Claim 7.

# EUROPEAN SEARCH REPORT

**0078121**

Application number

EP 82 30 5372

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | A 23 F 5/18 |
| Y | DE-C- 48 106 (B.CHATEAU) *Claim* | 1,5-10 | A 23 F 5/26 |
| | --- | | |
| Y | DE-A-2 000 315 (NIRO ATOMIZER) *Claims 1,3* | 1,5-10 | |
| | --- | | |
| A | US-A-3 361 571 (L.NUTTING) *Column 12, line 25; figure 3C* | 2 | |
| | --- | | |
| A | CA-A- 980 165 (W.LEE et al.) | | |
| | --- | | |
| A | FR-A-2 352 497 (SOC.DES PRODUITS NESTLE) | | |
| | ----- | | |

| | TECHNICAL FIELDS SEARCHED (Int. Cl. ³) |
|---|---|
| | A 23 F |

The present search report has been drawn up for all claims

| Place of search | Date of completion of the search | Examiner |
|---|---|---|
| THE HAGUE | 04-02-1983 | DESMEDT G.R.A. |